# FASCICULE DE BREVET EUROPEEN

(11) **EP 0 521 795 B1**
(45) Date de publication et mention de la délivrance du brevet: **27.09.1995**
(21) Numéro de dépôt: 92401916.9
(22) Date de dépôt: 03.07.1992
(51) Int. Cl.: A47J 45/06, A47J 45/08

(54) **Ustensile de cuisson à poignée inamovible**
Kochgerät mit unabnehmbarem Griff
Cooking utensil with an unremovable grip

(30) Priorité: 05.07.1991 FR 9108442
(43) Date de publication de la demande: 07.01.1993
(73) Titulaire: SEB S.A., 69130 Ecully (FR)
(72) Inventeur: Doumeng, Lionel, F-74150 Marcellaz-Albanais (FR)
(74) Mandataire: Keib, Gérard

(56) Documents cités:
- EP-A- 0 070 205
- AU-B- 417 138
- DE-A- 2 445 498
- FR-A- 779 748
- US-A- 1 482 765

## Description

La présente invention concerne un ustensile de cuisson à manche, tel qu'une casserole, une poêle à frire, un poêlon ou coupelle pour appareil à raclette ou analogue.

L'invention vise plus particulièrement un ustensile de cuisson comportant un récipient pourvu d'un embout métallique formant insert par engagement à force dans un évidement allongé d'une poignée en matière thermiquement isolante, l'insert comportant des moyens d'ancrage propres à assurer sa fixation à l'intérieur de l'évidement.

On connaît par le EP-A-0 070 205 de la demanderesse un ustensile de cuisson sur lequel la poignée est fixée par un dispositif comprenant un goujon métallique engagé à force dans un rivet métallique solidaire du corps de l'ustensile. Le rivet se déforme dans un alésage du goujon sous l'effet d'une force appliquée axialement sur le rivet. Ce type de fixation, très fiable, exige toutefois l'application d'une force relativement importante pour provoquer la déformation du goujon, qui tient ici lieu d'insert.

On connaît par ailleurs, par le DE-A-2 445 498 un mode de fixation pour manche à balai, dans lequel un embout cylindrique comporte des pointes d'ancrage destinées à pénétrer à la fois dans la paroi du manche et dans celles de la brosse lors de la fixation qui se fait, ici aussi, par engagement à force. Le retrait du manche hors de la brosse suppose seulement une force d'arrachement sensiblement égale à celle nécessaire à l'enfoncement pour faire subir aux pointes ancrées dans la brosse une déformation inverse et annuler l'effet d'ancrage. Or cette force est relativement facile à appliquer du fait que le manche offre une bonne prise.

Ces deux modes de fixation, cités à titre d'exemples de la technique connue, ont pour principe l'engagement à force d'un insert pourvu de moyens d'ancrage, ces moyens d'ancrage étant tels qu'ils se déforment avec un effet d'ancrage lors de l'engagement à force et qu'ils subissent une déformation inverse annulant l'effet d'ancrage lorsque l'on exerce un effort de traction tendant à désolidariser les deux parties. Si l'effort de traction est équivalent à la force qui a été nécessaire à l'enfoncement, les deux parties se trouvent désolidarisées.

Les modes de fixation connus, du type précité, présentent en outre l'inconvénient de nécessiter plusieurs pièces indépendantes du corps de l'ustensile et du manche. Ceci est inévitable lorsque l'alésage destiné à recevoir l'insert ne peut être pratiqué directement dans la poignée. Ainsi, le dispositif de fixation selon le EP - A - 0 070 205 précité comprend, dans ses divers modes de réalisation, un goujon, un rivet et éventuellement une bille ou une rondelle.

On connaît également de AU - B - 417 138, un ustensile de cuisson comportant un récipient pourvu d'un embout formant insert par engagement à force dans un évidement allongé d'une poignée en matière thermiquement isolante, l'insert comportant des moyens d'ancrage propres à assurer sa fixation à l'intérieur de l'évidement. Cependant, ce mode de fixation nécessite de créer au fond de l'évidement une languette qui vient s'insérer entre deux branches de l'insert.

Le but de la présente invention est de proposer dans un ustensile culinaire un mode de fixation de la poignée qui soit simple, avec des opérations d'usinage réduites au minimum et un montage rapide, la poignée devant être inamovible une fois montée.

L'ustensile de cuisson selon l'invention comporte ainsi un récipient pourvu d'un embout métallique formant insert par engagement à force dans un évidement allongé d'une poignée en matière thermiquement isolante, l'insert comportant des moyens d'ancrage propres à assurer sa fixation à l'intérieur de l'évidement. Suivant l'invention, cet ustensile culinaire est caractérisé en ce que les moyens d'ancrage comprennent une patte déformable dont la longueur est supérieure au diamètre de l'évidement de la poignée, cette patte étant repliée lorsque l'insert est en place dans l'évidement, de sorte que l'axe de la patte forme un angle aigu avec l'axe longitudinal de l'évidement, et en ce que, lorsque l'insert est soumis à un effort de traction hors de l'évidement, ladite patte se déforme vers une position dans laquelle elle est perpendiculaire à l'axe longitudinal de l'évidement, en accentuant l'effet d'ancrage dans la paroi de l'évidement de la poignée.

L'effet d'ancrage ne repose pas ici sur la déformation des moyens d'ancrage lors de l'enfoncement, comme c'est le cas dans les moyens de fixation connus. Dans l'ustensile de cuisson selon l'invention, l'effet d'ancrage de l'insert dans l'évidement de la poignée est seulement amorcé lors de l'engagement à force et c'est lors d'un effort de traction axial, tendant à désolidariser les deux pièces, que se déforment les moyens d'ancrage en s'enfonçant davantage dans la paroi de l'évidement. On obtient ainsi une fixation irréversible qui repose sur un principe dynamique, selon lequel la cause génère elle-même l'effet qui la combat. Un avantage dérivé du fait qu'il n'est pas nécessaire d'obtenir une déformation des moyens d'ancrage lors de l'enfoncement est que celui-ci peut être effectué avec une force relativement négligeable, sans qu'il soit nécessaire d'utiliser une presse ou un marteau vibreur.

La configuration de l'insert, dans laquelle les moyens d'ancrage déformables sont constitués par une patte d'extrémité de l'insert, est à la fois simple à réaliser et particulièrement efficace puisqu'en réponse à un effort de traction tendant à désolidariser l'ustensile et sa poignée, la patte va s'arc-bouter et s'ancrer davantage dans la paroi de la poignée, réalisant ainsi de manière irréversible le verrouillage de l'insert dans la poignée.

Selon une caractéristique particulièrement avantageuse, l'insert est réalisé d'une seule pièce avec l'ensemble des moyens assurant sa fixation à la poignée.

Aucune pièce supplémentaire n'est donc nécessaire pour réaliser cette fixation de manière irréversible.

Dans un mode d'exécution optimal, l'insert est en acier et la poignée en un matériau thermiquement isolant tel que le bois ou une matière plastique suffisamment malléable pour se prêter à l'introduction à force de l'insert et constituer une surface d'accrochage pour ce dernier.

Du fait de l'élasticité de l'acier, les moyens d'ancrage déformables peuvent compenser, par un effet ressort, toute variation de cote de l'alésage susceptible d'intervenir lorsque deux éléments en matériaux à coefficient de dilatation différents sont soumis à des contraintes thermiques, comme c'est le cas pour les ustensiles culinaires.

D'autres particularités et avantages de l'invention apparaîtront encore dans la description ci-après.

Aux dessins annexés donnés à titre d'exemples non limitatifs:
- la figure 1 est une coupe longitudinale d'une poignée à fixer sur l'insert métallique constitué par l'embout d'un ustensile culinaire conforme à l'invention,
- la figure 2 est une vue agrandie du détail A de la figure 1,
- la figure 3 est une vue en bout de l'insert métallique de la figure 2,
- la figure 4 est une vue de la plaque métallique à partir de laquelle est réalisé l'insert,
- la figure 5 est une vue analogue à la figure 2, mais la poignée étant fixée sur l'ustensile culinaire.

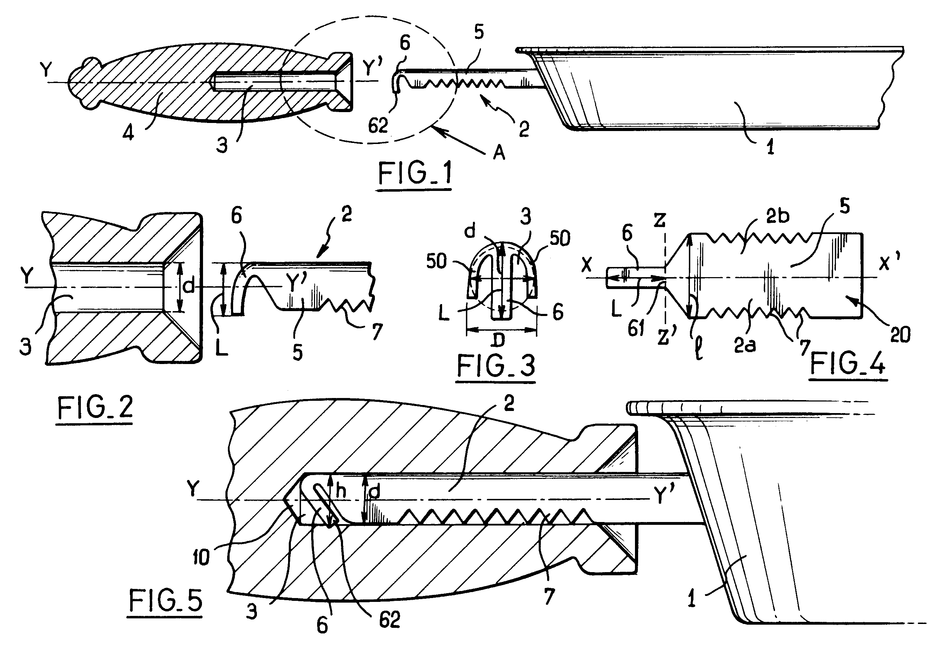

En référence à la figure 1, l'ustensile culinaire comprend un récipient métallique 1 sur la paroi extérieure duquel est fixé, par soudage, rivetage ou tout autre moyen approprié, un embout métallique allongé 2 destiné à être inséré à force dans un évidement cylindrique allongé 3, d'axe YY', ménagé, par exemple par perçage, dans le corps d'une poignée 4. Celle-ci est en une matière thermiquement isolante et relativement malléable, telle que du bois ou du polypropylène, pour se prêter à l'introduction à force de l'embout 2 et constituer une surface d'accrochage pour ce dernier.

L'embout 2, désigné ci-après par "l'insert" 2, est réalisé d'une pièce à partir d'une plaque d'acier 20, choisie pour ses propriétés de dureté et d'élasticité, nécessaires pour que l'insert remplisse les fonctions qui lui ont été dévolues par l'invention. La plaque 20 a été découpée, comme on le voit à la figure 4, pour former un corps 5, de forme généralement rectangulaire, pourvu à son extrémité avant d'une patte 6 située dans le prolongement de l'axe XX' du corps 5. La patte 6 a une longueur L au moins égale à la moitié de la largeur 1 du corps 5. Les bords parallèles 2a, 2b de ce dernier comportent des dents 7. L'épaisseur de la plaque 20, inférieure à 1 mm, a été choisie pour que les dents 7 soient pénétrantes et pour conférer à l'insert la relative souplesse nécessaire d'une part à son expansion élastique contre les parois de l'évidement 3, et d'autre part à la déformation de la patte 6 d'extrémité, lors du déplacement axial de l'insert 2 dans l'évidement 3 de la poignée.

Après découpage, la plaque 20 est emboutie pour conformer le corps 5 en une goulotte de section transversale sensiblement en U (voir figure 3), avec un écartement D entre les bords parallèles 2a, 2b légèrement supérieur au diamètre d de l'évidement cylindrique 3 de la poignée.

Avant engagement de l'insert 2 dans l'évidement 3, la patte 6 est pliée dans une direction sensiblement perpendiculaire à l'axe XX' du corps 5. On voit sur la figure 2 que la longueur L de la patte 6 est supérieure au diamètre d de l'évidement 3 de la poignée 4. En raison de la relative souplesse de l'acier utilisé, une action sur l'extrémité libre 62 de la patte 6 dans le sens longitudinal de l'insert 2, se traduit par un pivotement de la patte 6 autour d'un axe ZZ' perpendiculaire à l'axe XX' du corps 5 de l'insert et passant sensiblement par son point de rattachement 61 à l'extrémité dudit corps 5. Ce pivotement se fait entre deux positions dans lesquelles l'extrémité libre 62 de la patte est respectivement écartée (fig. 1 et 2) ou rapprochée (figure 5) du corps 5 de l'insert 2. Le bord d'extrémité avant du corps 5 qui porte la patte 6 a été biseauté de part et d'autre de celle-ci pour faciliter son repli dans la position rapprochée du corps 5.

L'insert 2 ainsi constitué est engagé à force dans l'évidement 3 de la poignée, en comprimant les parois 50 du corps 5 formant goulotte, les bords 2a, 2b pouvant se chevaucher. Une fois en place, lesdites parois 50 s'appuient élastiquement contre les parois de l'évidement 3, avec une tendance à l'écartement favorisée par l'élasticité de l'acier. Le corps 5 de l'insert épouse donc les parois de l'évidement 3 en un ajustement serré, surface contre surface, renforcé par l'action des dents d'acier 7 qui viennent mordre dans les parois en bois ou en une matière plastique relativement malléable de l'évidement 3. Ces forces de cohésion entre l'insert 2 et l'évidement 3 de la poignée sont complétées par l'action de verrouillage de la patte 6 à l'intérieur de la poignée 4, action que l'on va maintenant expliquer en référence aux figures 2 et 5.

Lors de l'introduction de l'insert 2 dans l'évidement 3, la patte 6 se replie, comme montré sur la figure 5, dans sa position rapprochée du corps 5 de l'insert 2, juste assez pour permettre l'engagement à force de l'insert 2 : la hauteur h de la patte 6, mesurée perpendiculairement à l'axe XX' du corps de l'insert, correspond alors sensiblement au diamètre d de l'évidement 3. Arrivée en fin de cource à l'extrémité 10 de l'évidement 3, la patte 6 se trouve serrée contre la paroi relativement malléable de l'évidement. Du fait de l'élasticité de l'acier, la patte 6 a tendance à reprendre sa position initiale, en prolongement de l'axe du corps 5, ce qui amorce l'effet d'ancrage dans la paroi de l'évidement. Si l'on exerce un effort de traction visant à extraire l'insert 2 de l'évidement 3, l'extrémité libre 61 d ela patte 6 va pénétrer, du fait de son profil à angles vifs, dans cette paroi relativement malléable, d'autant plus profondément que la patte 6 s'écarte du corps 5 de l'inser : la hauteur h de la patte 6, mesurée perpendiculairement à l'axe XX' du corps de l'insert ou à l'axe YY' de l'évidement, est alors supérieure au diamètre d de l'évidement 3 et tend à se rapprocher de la longueur L de la patte. La paroi de l'évidement 3 oppose toutefois une résistance suffisante à cette pénétration pour s'opposer à l'écartement de la patte 6 du corps 5 de l'insert et au retrait de ce dernier hors de l'évidement 3. Cette opposition augmente avec la force de traction exercée sur la partie extérieure de l'insert 2 ou sur le récipient 1 qui lui est rattaché.

On obtient ainsi, avec l'ustensile de cuisson conforme à l'invention, un mode de fixation simple, économique et extrêmement fiable de la poignée isolante du fait que l'insert, réalisé d'une seule pièce, porte ses propres moyens de fixation dans la poignée, qu'aucun organe de solidarisation des deux pièces n'est extérieur et donc susceptible de se détériorer et enfin que le moyen d'ancrage constitué par l'extrémité déformable de l'insert est d'autant plus efficace que l'effort de traction pour extraire l'insert de la poignée est plus grand.

Dans une réaisation simplifiée de l'invention, les bords parallèles du corps de l'insert pourraient ne pas comporter d'indentations. Ces bords pourraient être jointifs, le corps de l'insert formant alors un cylindre complet, pourvu qu'une espace soit ménagé pour permettre le pivotement de la patte entre deux positions dans lesquelles son extrémité libre est respectivement écartée ou rapprochée du corps de l'embout.

Le corps de l'insert pourrait n'être que très peu courbé ou même sensiblement plan, sa largeur correspondant alors sensiblement à une corde ou un diamètre de l'évidmeent de la poignée. Dans ce cas, les indentations seraient avantageusement orientées de manière à ne pas gêner l'introduction de l'insert dans le logement mais au contraire à s'opposer à son retrait. L'entrée de l'évidement pourrait être fermée par un cache cylindrique coulissant sur l'insert sensiblement plan.

## Revendications

1. Ustensile de cuisson comportant un récipient (1) pourvu d'un embout métallique formant insert (2) par engagement à force dans un évidement allongé (3) d'une poignée (4) en matière thermiquement isolante, l'insert (2) comportant des moyens d'ancrage propres à assurer sa fixation à l'intérieur de l'évidement (3), caractérisé en ce que les moyens d'ancrage comprennent une patte déformable (6) dont la longueur (L) est supérieure au diamètre (d) de l'évidement (3) de la poignée, cette patte étant repliée, lorsque l'insert (2) est en place dans l'évidement (3), de sorte que l'axe de la patte (6) forme un angle aigu avec l'axe longitudinal (YY') de l'évidement (3), et en ce que, lorsque l'insert (2) est soumis à un effort de traction hors de l'évidement (3), ladite patte (6) se déforme vers une position dans laquelle elle est perpendiculaire à l'axe longitudinal (YY') de l'évidement (3), en accentuant l'effet d'ancrage dans la paroi de l'évidement (3) de la poignée (4).

2. Ustensile de cuisson conforme à la revendication 1, caractérisé en ce que l'insert (2) comporte un corps allongé (5) pourvu à son extrémité de ladite patte déformable (6), l'axe de la patte (6) formant un angle aigu avec l'axe du corps (5) de l'insert lorsque l'insert (2) est en place dans l'évidement (3) et ladite patte (6) s'écartant du corps (5) de l'insert lors d'un effort de traction axial sur l'insert (2).

3. Ustensile de cuisson conforme à l'une des revendications 1 ou 2, caractérisé en ce que l'insert (2) est réalisé d'une seule pièce avec l'ensemble des moyens (2a, 2b, 6, 7) assurant sa fixation à la poignée (4).

4. Ustensile de cuisson conforme à l'une des revendications 2 ou 3, caractérisé en ce que le corps (5) de l'insert (2) est conformé en une goulotte de section transversale sensiblement en U, dont les parois (50) s'appuient élastiquement contre les parois de l'évidement (3) de la poignée, avec une tendance à l'écartement.

5. Ustensile de cuisson conforme à l'une des revendications 2 à 4, caractérisé en ce que les bords (2a, 2b) des parois (50) du corps (5) de l'insert (2) comportent des dents (7).

6. Ustensile de cuisson conforme à l'une des revendications 1 à 5, caractérisé en ce que l'insert (2) est en acier et la poignée (4) en un matériau thermiquement isolant tel que le bois ou une matière plastique suffisamment malléable pour se prêter à l'introduction à force de l'insert (2) et constituer une surface d'accrochage pour ce dernier.

## Claims

1. A cooking utensil comprising a receptacle (1) provided with a metal extension which forms an insert (2) by force-fitting in an elongate recess (3) in a handle (4) of thermally insulating material, the insert (2) comprising anchoring means adapted to secure it inside the recess (3), characterised in that the anchoring means comprise a deformable lug (6), the length (L) of which is greater than the diameter (d) of the recess (3) of the handle, said lug being bent over when the insert (2) is in place in the recess (3), in such manner that the axis of the lug (6) forms an acute angle with the longitudinal axis (YY') of the recess (3), and in that when the insert (2) is subjected to a tractive force to remove it from the recess (3) the lug (6) is deformed into a position in which it is perpendicular to the longitudinal axis (YY') of the recess (3), thus accentuating the anchoring effect in the wall of the recess (3) of the handle (4).

2. A cooking utensil according to claim 1, characterised in that the insert (2) comprises an elongate body (5) having the said deformable lug (6) at its end, the axis of the lug (6) forming an acute angle with the axis of the insert body (5) when the insert (2) is in place in the recess (3), the lug (6) moving away from the insert body (5) when an axial tractive force is applied to the insert (2).

3. A cooking utensil according to claim 1 or 2, characterised in that the insert (2) is made in one piece with the means (2a, 2b, 6, 7) which secure it to the handle (4).

4. A cooking utensil according to claim 2 or 3, characterised in that the body (5) of the insert (2) is shaped as a substantially U-shaped cross-section channel, the walls (50) of which bear resiliently against the walls of the recess (3) of the handle with a tendency to diverge.

5. A cooking utensil according to any one of claims 2 to 4, characterised in that the edges (2a, 2b) of the walls (50) of the body (5) of the insert (2) comprise teeth (7).

6. A cooking utensil according to any one of claims 1 to 5, characterised in that the insert (2) is made of steel and the handle (4) is made of a thermally insulating material such as wood or a plastic sufficiently malleable to allow force-fitting of the insert (2) and form an engagement surface for the latter.

## Patentansprüche

1. Kochgerät mit einem Behälter (1), der mit einem metallischen Ansatzstück versehen ist, das durch Aufbringen einer Kraft einen Einsatz (2) in einer länglichen Ausnehmung (3) eines aus thermisch isolierendem Material bestehenden Griffes (4) bildet, wobei der Einsatz (2) Verankerungsmittel aufweist, um seine Befestigung im Inneren der Ausnehmung (3) zu bewirken, dadurch gekennzeichnet, daS die Verankerungsmittel eine deformierbare Klaue (6) enthalten, deren Länge (L) größer als der Durchmesser (d) der Ausnehmung (3) des Griffes ist, wobei diese Klaue dann, wenn der Einsatz in der Ausnehmung (3) positioniert ist, derart umgebogen ist, daß die Achse der Klaue (6) mit der Längsachse (YY') der Ausnehmung (3) einen spitzen Winkel bildet, und daß sich die Klaue (6) unter Verstärkung des Effekts einer Verankerung in der Wand der Ausnehmung (3) des Griffes (4) zu einer Lage hin verformt, in der sie zu der Längsachse (YY') der Ausnehmung (3) senkrecht ist, wenn der Einsatz (2) einer aus der Ausnehmung (3) herausgerichteten Zugkraft ausgesetzt ist.

2. Kochgerät nach Anspruch 1, dadurch gekennzeichnet, daß der Einsatz (2) einen länglichen Körper (5) aufweist, der an seinem Ende mit der deformierbaren Klaue (6) versehen ist, wobei die Achse der Klaue (6) mit der Achse des Körpers (5) des Einsatzes einen spitzen Winkel bildet, wenn der Einsatz (2) in der Ausnehmung (3) positioniert ist, und wobei sich die Klaue (6) von dem Körper (5) entfernt, wenn auf den Einsatz (2) eine axiale Zugkraft einwirkt.

3. Kochgerät nach einem der Ansprüche 1 oder 2, dadurch gekennzeichnet, daß der Einsatz (2) mit der Einheit der seine Befestigung in dem Griff (4) bewirkenden Mittel (2a, 2b, 6, 7) einstückig gefertigt ist.

4. Kochgerät nach einem der Ansprüche 2 oder 3, dadurch gekennzeichnet, daß der Körper (5) des Einsatzes (2) aus einer im Querschnitt im wesentlichen U-förmigen Rinne gebildet ist, deren sich spreizenden Wände (50) federnd an den Wänden der Ausnehmung (3) des Griffes anliegen.

5. Kochgerät nach einem der Ansprüche 2 bis 4, dadurch gekennzeichnet, daß die Ränder (2a, 2b) der Wände (50) des Körpers (5) des Einsatzes (2) Zähne (7) aufweisen.

6. Kochgerät nach einem der Ansprüche 1 bis 5, dadurch gekennzeichnet, daß der Einsatz (2) aus Stahl besteht und der Griff (4) aus einem thermisch isolierenden Material wie Holz oder einem Kunststoffmaterial besteht, das hinreichend dehnbar ist, um bei der unter Krafteinwirkung erfolgenden Einführung des Einsatzes (2) nachzugeben und für diesen eine Verankerungsfläche zu bilden.
